# EUROPEAN PATENT SPECIFICATION

(11) **EP 3 652 460 B1**
(45) Date of publication and mention of the grant of the patent: **14.05.2025**
(21) Application number: 18737271.9
(22) Date of filing: 06.07.2018
(51) Int. Cl.: F16F 1/12, F16F 3/04

(54) **COUPLING SYSTEM PARTICULARLY FOR TWIN-SPRING MODULES**
KUPPLUNGSSYSTEM, INSBESONDERE FÜR DOPPELFEDERMODULE
SYSTÈME D'ACCOUPLEMENT, DESTINÉ EN PARTICULIER À DES MODULES À DEUX RESSORTS

(30) Priority: 11.07.2017 IT 201700077733
(43) Date of publication of application: 20.05.2020
(73) Proprietor: Air Torque S.p.A., 24060 Costa di Mezzate (Bergamo) (IT)
(72) Inventor: MARINONI, Antonio, 24064 Grumello del Monte (IT); PARIS, Ignazio, 24064 Grumello del Monte (IT)
(74) Representative: Modiano, Micaela Nadia
(86) International application number: PCT/EP2018/068355
(87) International publication number: WO 2019/011799

(56) References cited:
- WO-A1-01/05700
- DE-U- 7 409 850
- GB-A- 545 720
- US-A- 4 881 725
- US-A1- 2008 217 567

## Description

The present invention relates to a coupling system particularly for twin-spring modules. The coupling system described herein is particularly but not exclusively useful and practical for "guiding" the movement of two springs arranged in series and located within a mechanical module.

Springs are mechanical elements capable of absorbing large quantities of energy without reaching critical stresses. For this purpose, springs are geometrically shaped so as to allow the occurrence of great displacements while maintaining the deformations within the elastic range. Among the various applications in which springs are used, mention can be made of the following: impact attenuation, vibration reduction or augmentation, energy storage and application of forces that are proportional to position.

In the various applications cited above it is possible to use multiple springs simultaneously. The typical configurations are those of springs arranged in series and springs arranged in parallel.

Springs arranged in series are subjected to the same force, while the overall elongation is given by the sum of the individual elongations of the individual springs.

Springs arranged in parallel are instead subjected to the same elongation, while the force applied is equal to the sum of the individual forces.

Various types of systems for the management of twin-spring modules, i.e. mechanical modules characterized by the presence of two or more springs arranged in series, are currently in use.

Typical examples of known systems for the management of twin-spring modules, as well as the most widespread ones and the ones that find greatest application at the industrial level, are systems characterized by a sliding disk which is coupled to the two springs arranged in series and a stem that is adapted to slide, during the compression of the two springs, within a longitudinal guide.

GB 545,720 A discloses a twin-spring module with a coupling system comprising a sliding disk.

However, these systems are not free from drawbacks, which include the fact that the movement of the sliding disk along the longitudinal guide generates a high friction force, making this movement complex and laborious.

Another drawback of these systems for the management of twin-spring modules of the known type resides in that they can be affected by structural problems caused by the lack of alignment of the two springs arranged in series.

A further drawback of these systems for the management of twin-spring modules of the known type resides in that the insertion of the stem within the longitudinal guide can cause locking problems, placing at risk the mechanical strength and the containment of said longitudinal guide.

The aim of the present invention is to overcome the limitations of the background art described above, by providing a coupling system particularly for twin-spring modules that allows to keep the two springs arranged in series mutually aligned.

Within this aim, an object of the present invention is to conceive a coupling system particularly for twin-spring modules that allows a movement of a sliding disk along a longitudinal guide with minimal friction force.

Another object of the present invention is to devise a coupling system particularly for twin-spring modules that allows minimal flexibility between the ends of the two springs arranged on the two ends of the sliding disk.

A further object of the present invention is to conceive a coupling system particularly for twin-spring modules that allows to reduce the structural problems of systems of the known type.

Another object of the present invention is to provide a coupling system particularly for twin-spring modules that is highly reliable, relatively simple to provide and at competitive costs if compared with the prior art.

This aim, as well as these and other objects which will become better apparent hereinafter, are achieved by a coupling system particularly for twin-spring modules, as defined in claim 1.

Further characteristics and advantages of the invention will become better apparent from the description of a preferred but not exclusive embodiment of the coupling system particularly for twin-spring modules according to the invention, illustrated by way of non-limiting example in the accompanying drawings, wherein:

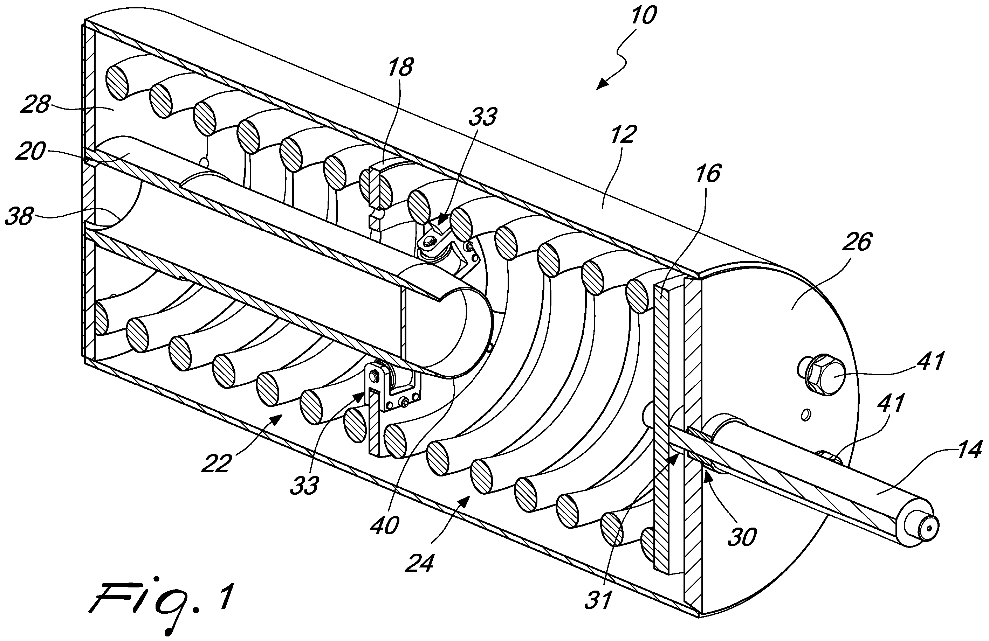

Figure 1 is a perspective view of an embodiment of the coupling system particularly for twin-spring modules according to the present invention;

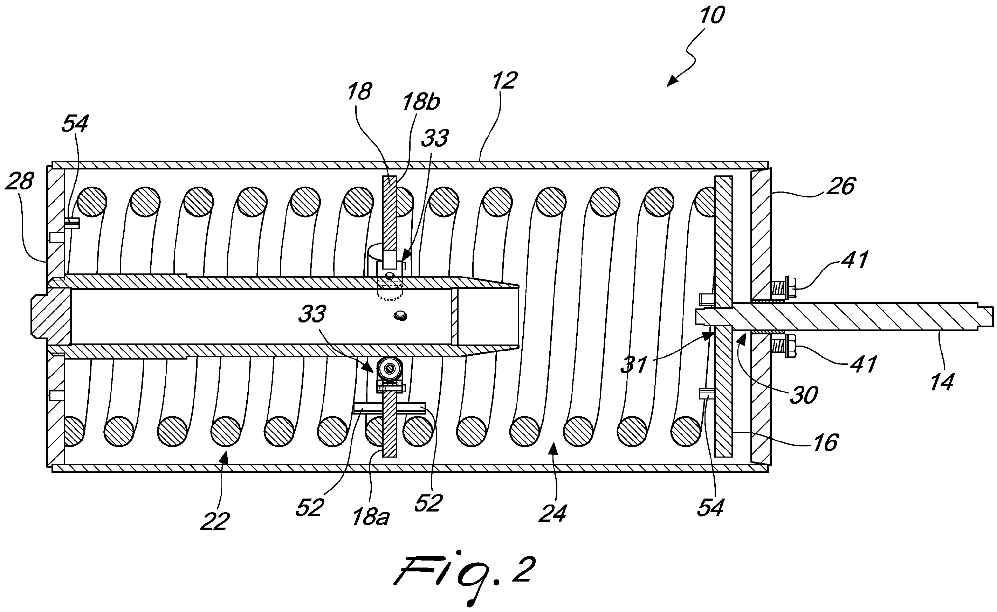

Figure 2 is a sectional side view of an embodiment of the coupling system particularly for twin-spring modules according to the present invention;

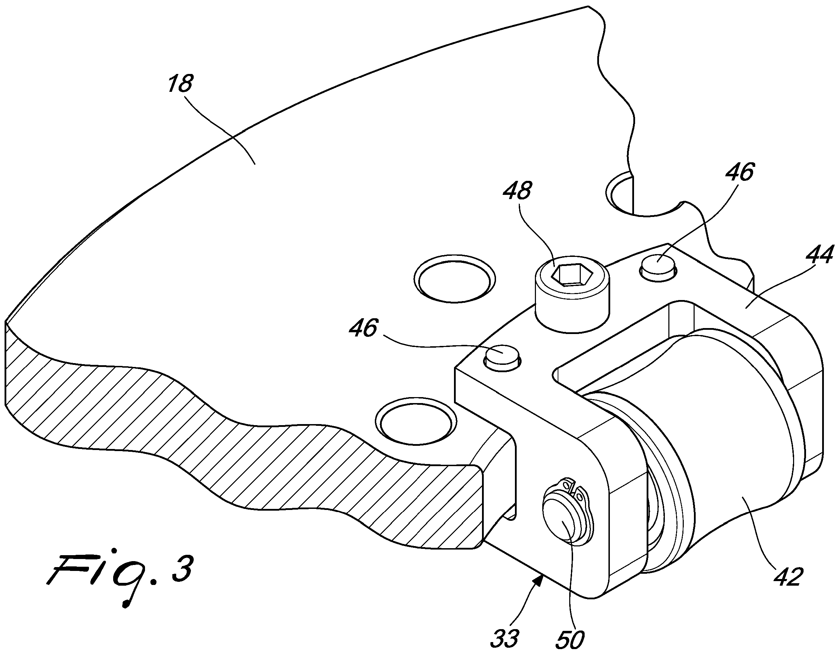

Figure 3 is a detail view of a movement means comprised in the sliding assembly of one embodiment of the coupling system particularly for twin-spring modules according to the present invention.

With reference to the figures, the coupling system particularly for twin-spring assemblies according to the invention, designated generally by the reference numeral 10, comprises substantially a preferably cylindrical hollow body 12, a longitudinal guide 20 which is coaxial with respect to the preferably cylindrical hollow body 12, a sliding disk 18, a first spring 22 and a second spring 24 which are fixed to the ends of the sliding disk 18, a compression disk 16 arranged within the preferably cylindrical hollow body 12, and a stem 14, which is fixed to the compression disk 16 and passes through a hole 30 that is present in the distal wall 26.

The preferably cylindrical hollow body 12 is the element that constitutes the load-bearing structure of the coupling system 10. In one embodiment of the invention, the preferably cylindrical hollow body 12 is made of metallic material, such as for example steel or aluminum.

A proximal wall 28 and a distal wall 26 are fixed to the ends of the preferably cylindrical hollow body 12 and both are preferably made of metallic material, such as for example steel or aluminum. In one embodiment of the invention, these ends have a flat and circular shape, with such a diameter that their outer edge corresponds to the edge of the ends of the preferably cylindrical hollow body 12.

The proximal wall 28 comprises fixing means 54 adapted to fix the proximal wall 28 to an end of the first spring 22. The proximal wall 28, furthermore, is coupled to one end of the longitudinal guide 20. In addition to the functions of the structural type, the proximal wall 28 also has the task of stopping the motion of the two springs 22, 24 arranged in series, constituting the mechanical stroke limiting abutment of the coupling system 10.

The distal wall 26 comprises a hole 30 adapted for the passage of a stem 14. The distal wall 26 further comprises locking means 41 configured for locking the coupling system 10 to the supports that are present on the machine for which it is intended, such as for example a pneumatically actuated actuator. The locking means 41 comprised in the coupling system 10 can be constituted for example by screws, bolts or nuts arranged on the outer surface of the distal wall 26.

The longitudinal guide 20 comprises a first end 38 which is fixed to the proximal wall 28 of the preferably cylindrical hollow body 12. In one embodiment of the invention, the longitudinal guide has a hollow cylindrical shape and is conveniently arranged along the longitudinal axis of the preferably cylindrical hollow body 12. The longitudinal guide 20 allows the sliding of the movement means 33 comprised within the sliding disk 18.

The sliding disk 18 comprises at least one pin 52 which is adapted to fix a first end 18a of the sliding disk 18 to one end of the first spring 22. The sliding disk 18 further comprises a sliding assembly which comprises at least two movement means 33.

The movement means 33 are configured to allow the movement of the sliding disk 18 along the longitudinal guide 20. The movement means 33 are conveniently coupled to the sliding disk 18. In one embodiment of the invention, the movement means 33 allow a movement of the sliding disk 18 along the longitudinal guide 20 with minimal friction force.

The movement means 33 comprise a frame 44 which is conveniently coupled to the sliding disk 18 by way of at least two pivots 46 and at least one screw 48. The frame 44 accommodates a roller 42 which is conveniently fixed to the frame 44 by means of a longitudinal bar 50. The roller 42 is adapted to rotate about the longitudinal bar 50.

The sliding disk 18 comprises at least one pin 52 which is adapted to fix a second end 18b of the sliding disk 18 to one end of the second spring 24.

The pins 52 couple the ends of the two springs 22, 24 arranged in series to the two ends of the sliding disk 18. This coupling allows to reduce to a minimum the flexibility of the ends of the two springs in case of motion thereof (compression and/or decompression).

In one embodiment of the invention, the pins 52 allow to maintain an alignment between the first spring 22 and the second spring 24 comprised within the preferably cylindrical hollow body 12.

The first spring 22 comprises an end coupled to the proximal wall 28 and an end coupled to a first end 18a of the sliding disk 18. In one embodiment of the invention, the first spring 22 is preferably a helical compression and traction spring.

The second spring 24 comprises an end coupled to the compression disk 16 and an end coupled to a second end 18b of the sliding disk 18. In one embodiment of the invention, the second spring 24 is preferably a helical compression and traction spring.

The compression disk 16, preferably made of metallic material, such as for example steel or aluminum, is arranged within the preferably cylindrical hollow body 12, at right angles to the longitudinal axis of the preferably cylindrical hollow body 12 proper. In one embodiment of the invention, the compression disk 16 has a flat and circular shape, with such a diameter that its outer edge corresponds to the internal surface of the preferably cylindrical hollow body 12.

The compression disk 16 is arranged proximate to the distal wall 26 and has furthermore a hole 31 for the fixing of the stem 14.

The stem 14 is a stem of the simple type and is constituted by a bar preferably made of metallic material, such as for example steel or aluminum. The stem 14 is coaxial to the preferably cylindrical hollow body 12 and is perpendicular to the compression disk 16.

One end of the stem 14 is inserted in the hole 31 of the compression disk 16. The stem 14 furthermore passes through the hole 30 that is present in the distal wall 26.

Operation of the coupling system 10 particularly for twin-spring modules according to the present invention, for example in the case in which the latter is used in a pneumatically actuated actuator, is as follows.

As a consequence of the thrust received from the stem 14, the compression disk 16, coupled to the stem 14, is actuated toward the proximal wall 28. The linear motion generated by the compression disk 16 is thus transmitted to the second spring 24, the latter being coupled to the compression disk 16 by way of fixing means 54.

The second spring 24 then begins to be compressed and transmits the linear motion to the first spring 22 by means of the sliding disk 18, the latter being coupled to the ends of both springs by means of the pins 52.

The sliding disk 18 slides along the longitudinal guide 20 toward the proximal wall 28 by way of the movement means 33, such as for example rollers, and the first spring 22 begins to be compressed due to the thrust that it has received.

The movement of the sliding disk 18 stops when the sliding disk 18 is proximate to the proximal wall 28 and accordingly the compression disk 16 is proximate to the second end 40 of the longitudinal guide 20.

The inactive state or initial state of the coupling system 10 is reached as a consequence of the decompression of the two springs 22, 24 arranged in series.

The first spring 22 begins to decompress and transmits the linear motion to the second spring 24 by way of the sliding disk 18.

The sliding disk 18 slides along the longitudinal guide 20 toward the distal wall 26 by way of the movement means 33, such as for example rollers, and the second spring 24 begins to decompress.

The linear motion generated by the second spring 24 is thus transmitted to the stem 14 by way of the compression disk 16 coupled to the second spring 24.

The sliding disk 18 and the compression disk 16 thus return to their initial positions and the two springs 22, 24 arranged in series are in inactive conditions.

In practice it has been found that the invention achieves fully the intended aim and objects. In particular, it has been shown that the coupling system particularly for twin-spring assemblies thus conceived allows to overcome the quality limitations of the prior art, since it allows to maintain the two springs arranged in series mutually aligned.

Another advantage of the coupling system particularly for twin-spring modules according to the invention resides in that it allows a movement of a sliding disk along a longitudinal guide with minimal friction force.

A further advantage of the coupling system particularly for twin-spring modules according to the invention resides in that it allows minimal flexibility between the two ends of the two springs arranged on the two ends of the sliding disk.

Another advantage of the coupling system particularly for twin-spring modules according to the invention resides in that it allows to reduce the structural problems of systems of the known type.

Although the coupling system particularly for twin-spring modules according to the invention has been conceived in particular to "guide" the movement of two springs arranged in series, it can in any case be used, more generally, in combination with pneumatically actuated actuators.

The invention thus conceived is susceptible of numerous modifications and variations, all of which are within the scope of the appended claims. All the details may further be replaced with other technically equivalent elements.

In practice, the materials used, so long as they are compatible with the specific use, as well as the contingent shapes and dimensions, may be any according to requirements and to the state of the art.

To conclude, the scope of the protection of the claims must not be limited by the illustrations or preferred embodiments shown in the description by way of example, but rather the claims must comprise all the characteristics of patentable novelty that reside in the present invention, including all the characteristics that would be treated as equivalents by the person skilled in the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A coupling system (10) particularly for twin-spring modules, comprising a hollow body (12) configured to accommodate a first spring (22) and a second spring (24), said hollow body (12) comprising a sliding disk (18) arranged between said first spring (22) and said second spring (24), a compression disk (16) arranged proximate to a distal wall (26) of said hollow body (12) and a longitudinal guide (20) that is coaxial to said hollow body (12), said sliding disk (18) being configured to maintain an alignment between said first spring (22) and said second spring (24) and to allow a movement of said sliding disk (18) along said longitudinal guide (20), said sliding disk (18) sliding along said longitudinal guide (20) by way of a sliding assembly which comprises at least two movement means (33), **characterized in that** each movement means (33) comprises a a frame (44) which is coupled to the sliding disk (18) by way of at least two pivots (46) and at least one screw (48), wherein the frame (44) accommodates a roller (42) which is fixed to the frame (44) by means of a longitudinal bar (50), wherein the roller (42) is adapted to rotate about the longitudinal bar (50).

2. The coupling system (10) particularly for twin-spring modules according to claim 1, **characterized in that** a first end (38) of said longitudinal guide (20) is coupled to a proximal wall (28) of said hollow body (12).

3. The coupling system (10) particularly for twin-spring modules according to claim 1, **characterized in that** said compression disk (16) is coupled to a stem (14) by means of a hole (31) of said compression disk (16).

4. The coupling system (10) particularly for twin-spring modules according to claim 3, **characterized in that** said stem (14) passes through a hole (30) of a distal wall (26) of said hollow body (12).

5. The coupling system (10) particularly for twin-spring modules according to any one of the preceding claims, **characterized in that** said movement means (33) comprised in the sliding assembly are coupled to said sliding disk (18) comprised in said hollow body (12).

6. The coupling system (10) particularly for twin-spring modules according to any one of the preceding claims, **characterized in that** at least one between said distal wall (26) and said proximal wall (28) comprises locking means (41).

7. The coupling system (10) particularly for twin-spring modules according to any one of the preceding claims, **characterized in that** said first spring (22) is coupled to said sliding disk (18) by means of at least one pin (52).

8. The coupling system (10) particularly for twin-spring modules according to any one of the preceding claims, **characterized in that** said second spring (24) is coupled to said sliding disk (18) by means of at least one pin (52).

9. The coupling system (10) particularly for twin-spring modules according to any one of the preceding claims, **characterized in that** said first spring (22) is coupled to said proximal wall (28) by way of at least one fixing means (54).

10. The coupling system (10) particularly for twin-spring modules according to any one of the preceding claims, **characterized in that** said second spring (24) is coupled to said compression disk (16) by way of at least one fixing means (54).

## Patentansprüche

1. Ein Kupplungssystem (10), insbesondere für Doppelfedermodule, das einen Hohlkörper (12) umfasst, der ausgebildet ist, um eine erste Feder (22) und eine zweite Feder (24) aufzunehmen, wobei der Hohlkörper (12) eine Gleitscheibe (18) umfasst, angeordnet zwischen der ersten Feder (22) und der zweiten Feder (24), eine Druckscheibe (16), angeordnet in der Nähe einer distalen Wand (26) des Hohlkörpers (12), und eine längliche Führung (20), die koaxial mit dem Hohlkörper (12) ist; wobei die Gleitscheibe (18) ausgebildet ist, um eine Ausrichtung zwischen der ersten Feder (22) und der zweiten Feder (24) aufrechtzuerhalten und eine Bewegung der Gleitscheibe (18) entlang der länglichen Führung (20) zu ermöglichen, wobei die Gleitscheibe (18) entlang der länglichen Führung (20) mit Hilfe eines Gleitaufbaus gleitet, der mindestens zwei Bewegungsmittel (33) umfasst; **dadurch gekennzeichnet, dass** jedes Bewegungsmittel (33) einen Rahmen (44) umfasst, der mit der Gleitscheibe (18) über mindestens zwei Drehzapfen (46) und mindestens eine Schraube (48) gekoppelt ist; wobei der Rahmen (44) eine Walze (42) enthält, die über einen Längsstift (50) am Rahmen (44) befestigt ist; wobei die Walze (42) ausgebildet ist, um sich um den Längsstift (50) zu drehen.

2. Das Kupplungssystem (10), insbesondere für Doppelfedermodule, gemäß Anspruch 1, **dadurch gekennzeichnet, dass** ein erstes Ende (38) der Längsführung (20) mit einer proximalen Wand (28) des Hohlkörpers (12) gekoppelt ist.

3. Das Kupplungssystem (10), insbesondere für Doppelfedermodule, gemäß Anspruch 1, **dadurch gekennzeichnet, dass** die Druckscheibe (16) über ein Loch (31) in der Druckscheibe (16) mit einem Schaft (14) gekoppelt ist.

4. Das Kupplungssystem (10), insbesondere für Doppelfedermodule, gemäß Anspruch 3, **dadurch gekennzeichnet, dass** der Schaft (14) durch ein Loch (30) in einer distalen Wand (26) des Hohlkörpers (12) verläuft.

5. Das Kupplungssystem (10), insbesondere für Doppelfedermodule, gemäß einem beliebigen der obigen Ansprüche, **dadurch gekennzeichnet, dass** die Bewegungsmittel (33), die in dem Gleitaufbau umfasst sind, mit der in dem Hohlkörper (12) umfassten Gleitscheibe (18) gekoppelt sind.

6. Das Kupplungssystem (10), insbesondere für Doppelfedermodule, gemäß einem beliebigen der obigen Ansprüche, **dadurch gekennzeichnet, dass** die distale Wand (26) und/oder die proximale Wand (28) Verriegelungsmittel (41) umfassen.

7. Das Kupplungssystem (10), insbesondere für Doppelfedermodule, gemäß einem beliebigen der obigen Ansprüche, **dadurch gekennzeichnet, dass** die erste Feder (22) mit der Gleitscheibe (18) über mindestens einen Stift (52) gekoppelt ist.

8. Das Kupplungssystem (10), insbesondere für Doppelfedermodule, gemäß einem beliebigen der obigen Ansprüche, **dadurch gekennzeichnet, dass** die zweite Feder (24) mit der Gleitscheibe (18) über mindestens einen Stift (52) gekoppelt ist.

9. Das Kupplungssystem (10), insbesondere für Doppelfedermodule, gemäß einem beliebigen der obigen Ansprüche, **dadurch gekennzeichnet, dass** die erste Feder (22) mit der proximalen Wand (28) über mindestens ein Befestigungsmittel (54) gekoppelt ist.

10. Das Kupplungssystem (10), insbesondere für Doppelfedermodule, gemäß einem beliebigen der obigen Ansprüche, **dadurch gekennzeichnet, dass** die zweite Feder (24) mit der Druckscheibe (16) über mindestens ein Befestigungsmittel (54) gekoppelt ist.

## Revendications

1. Un système d'accouplement (10), destiné en particulier à des modules à deux ressorts, comprenant un corps creux (12) configuré pour recevoir un premier ressort (22) et un second ressort (24), ledit corps creux (12) comprenant un disque de glissement (18) disposé entre ledit premier ressort (22) et ledit second ressort (24), un disque de compression (16) disposé à proximité d'une paroi distale (26) dudit corps creux (12) et un guide longitudinal (20) coaxial audit corps creux (12), ledit disque de glissement (18) étant configuré pour maintenir un alignement entre ledit premier ressort (22) et ledit second ressort (24) et pour permettre un mouvement dudit disque de glissement (18) le long dudit guide longitudinal (20), ledit disque de glissement (18) glissant le long dudit guide longitudinal (20) au moyen d'un ensemble glissant qui comprend au moins deux moyens de mouvement (33), **caractérisé en ce que** chaque moyen de mouvement (33) comprend un cadre (44) qui est couplé au disque de glissement (18) au moyen d'au moins deux pivots (46) et d'au moins une vis (48), dans lequel le cadre (44) accueille un rouleau (42) qui est fixé au cadre (44) au moyen d'une barre longitudinale (50), dans lequel le rouleau (42) est adapté pour tourner autour de la barre longitudinale (50).

2. Le système d'accouplement (10), destiné en particulier à des modules à deux ressorts, selon la revendication 1, **caractérisé par le fait qu'**une première extrémité (38) dudit guide longitudinal (20) est accouplée à une paroi proximale (28) dudit corps creux (12).

3. Le système d'accouplement (10), destiné en particulier à des modules à deux ressorts, selon la revendication 1, **caractérisé par le fait que** ledit disque de compression (16) est accouplé à une tige (14) au moyen d'un trou (31) dudit disque de compression (16).

4. Le système d'accouplement (10), destiné en particulier à des modules à deux ressorts, selon la revendication 3, **caractérisé par le fait que** ladite tige (14) traverse un trou (30) d'une paroi distale (26) dudit corps creux (12).

5. Le système d'accouplement (10), destiné en particulier à des modules à deux ressorts selon l'une quelconque des revendications précédentes, **caractérisé par le fait que** lesdits moyens de mouvement (33) compris dans l'ensemble glissant sont couplés audit disque de glissement (18) compris dans ledit corps creux (12).

6. Le système d'accouplement (10), destiné en particulier à des modules à deux ressorts selon l'une quelconque des revendications précédentes, **caractérisé par le fait qu'**au moins une entre ladite paroi distale (26) et ladite paroi proximale (28) comprend des moyens de verrouillage (41).

7. Le système d'accouplement (10), destiné en particulier à des modules à deux ressorts selon l'une quelconque des revendications précédentes, **caractérisé par le fait que** ledit premier ressort (22) est accouplé audit disque de glissement (18) au moyen d'au moins une goupille (52).

8. Le système d'accouplement (10), destiné en particulier à des modules à deux ressorts selon l'une quelconque des revendications précédentes, **caractérisé par le fait que** ledit second ressort (24) est accouplé audit disque de glissement (18) au moyen d'au moins une goupille (52).

9. Le système d'accouplement (10), destiné en particulier à des modules à deux ressorts selon l'une quelconque des revendications précédentes, **caractérisé par le fait que** ledit premier ressort (22) est couplé à ladite paroi proximale (28) au moyen d'au moins un moyen de fixation (54).

10. Le système d'accouplement (10), destiné en particulier à des modules à deux ressorts selon l'une quelconque des revendications précédentes, **caractérisé par le fait que** ledit second ressort (24) est couplé audit disque de compression (16) au moyen d'au moins un moyen de fixation (54).
